# EUROPÄISCHE PATENTANMELDUNG

(11) **EP 2 206 535 A1**
(43) Veröffentlichungstag der Anmeldung: **14.07.2010**
(21) Anmeldenummer: 09016016.9
(22) Anmeldetag: 24.12.2009
(51) Int. Cl.: A63B 21/008, A63B 22/08, G01L 3/10, G01L 3/14, A63B 24/00, A63B 71/02

(54) **Ergometer für den Einsatz unter Wasser mit Drehmomentmesseinrichtung**

(30) Priorität: 08.01.2009 DE 102009004397
(71) Anmelder: Nemcomed GmbH Medizin + Wellness, 79331 Teningen (DE)
(72) Erfinder: Scherer, Markus, 79331 Teningen (DE)
(74) Vertreter: Neymeyer, Franz

(57) **Zusammenfassung**

Die Erfindung betrifft ein Ergometer (1) für den Einsatz unter Wasser bestehend aus einem Grundgestell (2), welches mit einem Kurbeltrieb versehen ist, der aus einer Kurbelwelle (25), zwei seitlich an der Kurbelwelle (25) angeordneten Pedalhebeln (26, 27) mit Pedalen (28, 29) besteht, wobei die Kurbelwelle (25) im Bereich der Pedalhebel (26, 27) drehbar im Grundgestell (2) gelagert ist und wobei wenigstens zwei radial zur Kurbelwelle (25) verlaufende, mit der Kurbelwelle (25) umlaufende Tragstangen (31, 32) vorgesehen sind, an welchen jeweils wenigstens ein Widerstandselement (33, 34) angeordnet ist, durch welches unter Wasser ein Widerstandsmoment bei der Drehung der Kurbelwelle (25) bewirkt wird. Um eine reproduzierbare Leistungsmessung zu ermöglichen, ist erfindungsgemäß vorgesehen, dass auf der Kurbelwelle (25) eine Drehmomentmesseinrichtung (30) vorgesehen ist, welche drehfest mit der Kurbelwelle (25) in Verbindung steht und, dass die Tragstangen (31, 32) mit ihren Widerstandselementen (33, 34) auf der Kurbelwelle (25) drehbar gelagert und durch die Drehmomentmesseinrichtung (30) drehend antreibbar sind.

## Beschreibung

Die Erfindung betrifft ein Ergometer für den Einsatz unter Wasser, bestehend aus einem Grundgestell, welches mit einem Kurbeltrieb versehen ist, der aus einer Kurbelwelle und zwei seitlich an der Kurbelwelle angeordneten Pedalhebeln mit Pedalen besteht, wobei die Kurbelwelle im Bereich der Pedalhebel drehbar im Grundgestell gelagert ist und wobei wenigstens zwei radial zur Kurbelwelle verlaufende, mit der Kurbelwelle umlaufende Tragstangen vorgesehen sind, an welchen jeweils wenigstens ein Widerstandselement angeordnet ist, durch welches unter Wasser ein Widerstandsmoment bei der Drehung der Kurbelwelle bewirkt wird.

Ergometer sind schon seit langer Zeit bekannt und werden umgangssprachlich auch als sog. Heimtrainer bezeichnet. Solche Ergometer sind ortsfest aufstellbar und in ihrer Grundkonstruktion ähnlich der eines Fahrrades aufgebaut. So weisen solche Ergometer einen Kurbeltrieb auf, welcher aus einer Kurbelwelle und zwei seitlich an der Kurbelwelle angeordneten Pedalhebeln besteht, an welchen entsprechende Pedale zum Treten angeordnet sind. In der Regel sind solche Ergometer mit einer Art Schwungrad versehen, welches beispielsweise über einen Kettentrieb oder einen Riementrieb durch die Kurbelwelle angetrieben wird. Um unterschiedliche Belastungen und somit unterschiedliche Trainingseffekte einstellen zu können, ist das Schwungrad mit einer einstellbaren Bremseinrichtung versehen. Hierbei werden beispielsweise Wirbelstrombremsen oder auch sog. Bandbremsen eingesetzt. Dabei ist es bei solchen im Trockenen einzusetzenden Ergometern relativ einfach, eine Leistungsmessung durch eine entsprechende Messelektronik durchzuführen. Bei einer Bandbremse kann hier beispielsweise die Zugkraft am Bremsband sowie die Drehzahl der Kurbelwelle gemessen werden, aus welchen die Leistungsdaten durch eine entsprechende elektronische Auswertung ableitbar sind. In ähnlicher Weise kann dies auch mit einer Wirbelstrombremse geschehen, da dort Wirbelströme induziert werden, deren Größe messbar ist, so dass hier wiederum durch eine elektronische Auswertung auch Rückschlüsse auf den Leistungsdurchsatz gezogen werden können. Des Weiteren ist es bekannt, bei solchen Ergometern auch Pulsfrequenz, Tretfrequenz und dgl. mehr zu erfassen, so dass die trainierende Person ihre Leistungsfähigkeit oder ihren Leistungsstand überprüfen kann.

Mittlerweile ist man nun auch dazu übergegangen, solche Ergometer unter Wasser einzusetzen. Dabei können die Grundprinzipien eines "Trockenergometers" - wie oben beschrieben - bezüglich Aufbau und Konstruktion nicht eingesetzt werden, da unter Wasser völlig andere Betriebsbedingungen bezüglich Korrosion und dgl. mehr für einen solchen Ergometer bestehen. Insoweit unterscheiden sich die Grundkonzeptionen von "Unterwasserergometern" doch weitgehend von denjenigen eines "Trockenergometers". Insbesondere bezüglich der Abbremsung des Kurbeltriebes sind hier unterschiedliche Varianten bekannt geworden.

Hierzu sei beispielhaft auf die DE 600 31 017 P2 verwiesen, in welcher ein sog. "Unterwassertrainingsfahrrad" beschrieben ist. Bei dieser Konstruktion ist ein Grundgestell vorgesehen, über welches dieses Ergometer feststehend beispielsweise auf dem Untergrund eines Schwimmbassins aufstellbar ist. Dieses Grundgestell ist rahmenartig aufgebaut und weist einen entsprechenden Kurbeltrieb auf, der aus einer Kurbelwelle besteht, welche im Grundgestell drehbar gelagert ist. Dabei sind die Lagerpunkte bzw. Lagerstellen des Kurbeltriebes bzw. der Kurbelwelle voneinander beabstandet angeordnet. Zwischen diesen Lagerstellen weist die Kurbelwelle zwei oder mehr radial verlaufende Tragstangen auf, welche mit Widerstandselementen versehen sind. Diese Widerstandselemente können dabei plattenförmig oder behälterartig ausgebildet sein. In den äußeren Endbereichen seitlich neben dem Grundgestell sind an der Kurbelwelle die Pedalhebel angeordnet, die in ihren Endbereichen entsprechende Pedale für den tretenden Antrieb aufweisen. Des Weiteren können solche Ergometer auch mit einem Sattel und einem Lenker versehen sein, so dass diese diesbezüglich im Grundprinzip nach Art eines Fahrrades aufgebaut sind.

Da solche Ergometer unter Wasser eingesetzt werden sollen, wird das Widerstandsmoment beim Treten durch die Form und Gestaltung der Tragstangen mit ihren Widerstandselementen bestimmt. Das heißt, dass sich diese Tragstangen mit ihren Widerstandselementen zusammen mit dem Kurbeltrieb unter Wasser befinden, so dass mit höherer Tretgeschwindigkeit ein höheres Widerstandsmoment bewirkt wird. Solche Unterwassertrainingsfahrräder oder Unterwasserergometer ermöglichen, insbesondere auch für schwergewichtige Personen, ein äußerst angenehmes Training, da das Eigengewicht der trainierenden Person unter Wasser erheblich vermindert wird.

Problematisch bei solchen Ergometern, die für den Einsatz unter Wasser gedacht sind, ist jedoch eine reproduzierbare Leistungsmessung, aus welcher die trainierende Person ihren Leistungsstand oder Leistungsfortschritt ersehen kann. Insbesondere von Interesse ist hierbei die Erfassung und Speicherung von Leistungsdaten, die in Abhängigkeit vom Widerstandmoment über die Zeit erbracht werden.

Demgemäß liegt der Erfindung die Aufgabe zugrunde, ein Ergometer für den Einsatz unter Wasser derart auszugestalten, dass eine reproduzierbare Leistungsmessung ermöglicht wird.

Die Aufgabe wird erfindungsgemäß dadurch gelöst, dass auf der Kurbelwelle eine Drehmomentmesseinrichtung vorgesehen ist, welche drehfest mit der Kurbelwelle in Verbindung steht und dass die Tragstangen mit ihren Widerstandselementen auf der Kurbelwelle drehbar gelagert und durch die Drehmomentmesseinrichtung drehend antreibbar sind.

Durch die erfindungsgemäße Ausgestaltung wird ein Ergometer für den Einsatz unter Wasser zur Verfügung gestellt, mit welchem die Leistungsdaten einer trainierenden Person erfassbar sind. Hierzu ist auf der Kurbelwelle eine Drehmomentmesseinrichtung vorgesehen, welche drehfest mit der Kurbelwelle in Verbindung steht. Um das Widerstandsmoment, welches beim Treten durch die Tragstangen mit ihren Widerstandselementen erzeugt wird, messen zu können, sind die Tragstangen mit ihren Widerstandselementen auf der Kurbelwelle drehbar gelagert und durch die Drehmomentmesseinrichtung drehend angetrieben. D. h., dass das Antriebsdrehmoment, welches beim Treten in die Kurbelwelle eingeleitet wird, über die Drehmomentmesseinrichtung an die Tragstangen mit ihren Widerstandselementen weitergeleitet wird, so dass das Widerstandsdrehmoment zweifelsfrei und reproduzierbar messbar ist.

Dabei wird die Messung direkt "an der Kurbelwelle" durchgeführt, so dass der grundsätzliche Aufbau eines "Unterwasserergometers" im Prinzip nicht geändert werden muss.

Weitere vorteilhafte Ausgestaltungen der Erfindung sind den weiteren Unteransprüchen entnehmbar.

So kann gemäß Anspruch 2 vorgesehen sein, dass die Drehmomentmesseinrichtung scheibenförmig ausgebildet ist und in ihrem radial äußeren Bereich mit Kupplungselementen versehen ist, über welche die Tragstangen mit der Drehmomentmesseinrichtung drehfest in Verbindung stehen. Diese Ausgestaltung ermöglicht einen äußerst einfachen und platzsparenden Aufbau, so dass die Drehmomentmesseinrichtung zusammen mit den Tragstangen und den Widerstandselementen zwischen den in den äußeren Endbereichen der Kurbelwellen angebrachten Lagerstellen der Kurbelwelle anordenbar ist.

Des Weiteren kann gemäß Anspruch 3 vorgesehen sein, dass die Tragstangen etwa mittig zwischen den Pedalhebeln angeordnet und über eine gemeinsame Lagernabe auf der Kurbelwelle drehbar gelagert sind. Auch diese Ausgestaltung zeichnet sich durch einen äußerst einfachen Aufbau aus, wobei die Tragstangen beispielsweise über eine Schweißverbindung mit der Lagernabe in Verbindung stehen können. Durch die mittige Anordnung der Tragstangen an der Kurbelwelle wird des Weiteren eine symmetrische Belastung der Kurbelwellenlagerung erreicht, so dass hier nicht ein einseitiger Verschleiß zu befürchten ist.

Gemäß Anspruch 4 kann des Weiteren vorgesehen sein, dass zum drehenden Antrieb der Tragstangen ein Kupplungsring vorgesehen ist, mit welchem die Tragstangen feststehend in Verbindung stehen und dass der Kupplungsring mit den Kupplungselementen der Drehmomentmesseinrichtung drehfest gekoppelt ist. Durch diese Ausgestaltung ist eine äußerst einfache Kopplung zwischen der Drehmomentmesseinrichtung und den Tragstangen möglich. Dabei können die Tragstangen beispielsweise mit dem Kupplungsring verschweißt sein, woraus sich eine äußerst stabile Konstruktion ergibt.

Gemäß Anspruch 5 können zur Kopplung des Kupplungsringes mit der Drehmomentmesseinrichtung mehrere gleichmäßig am Umfang verteilt angeordnete Kupplungszapfen vorgesehen sein. Durch diese Kupplungszapfen ist insbesondere die Drehmomentmesseinrichtung im Bereich des Rahmengestells anordenbar, so dass die Kupplungsbolzen den axialen Abstand zwischen Kupplungsring und Drehmomentmesseinrichtung in einfacher Weise überbrücken.

Des Weiteren kann gemäß Anspruch 6 vorgesehen sein, dass die Kurbelwelle zur feststehenden Montage der Drehmomentmesseinrichtung einen radial vorstehenden, umlaufenden Montageflansch aufweist, mit welchem die Drehmomentmesseinrichtung verschraubt ist. Durch diese Ausgestaltung ist die Drehmomentmesseinrichtung als vorgefertigtes Bauteil in einfach Weise mit der Kurbelwelle koppelbar.

Gemäß Anspruch 7 kann des Weiteren vorgesehen sein, dass die Kurbelwelle im Bereich des Montageflansches geteilt ausgebildet ist und einen Zylinderabschnitt für die drehbare Lagerung der Lagernabe der Tragstangen und einen Lagerabschnitt für die Drehmomentmesseinrichtung bildet und dass der Zylinderabschnitt im Lagerabschnitt drehfest aufgenommen ist. Diese Ausgestaltung ermöglicht insbesondere eine vereinfachte Montage des kompletten Kurbeltriebes zusammen mit den an der Lagernabe und dem Kupplungsring feststehend vormontierten Tragstangen. Die drehfeste Verbindung zwischen dem Zylinderabschnitt und dem Lagerabschnitt der geteilten Kurbelwelle kann dabei über Klemmschrauben oder sonstige Formschlusselemente erreicht werden.

Des Weiteren kann gemäß Anspruch 8 das Grundgestell zur Lagerung der Kurbelwelle zwei voneinander beabstandete Lagerplatten aufweisen, zwischen welchen die Drehmomentmesseinrichtung zusammen mit den Tragstangen angeordnet ist. Diese Lagerplatten ermöglichen hier ebenfalls einen äußerst einfachen und kostengünstigen Aufbau, insbesondere was die Lagerung der Kurbelwelle betrifft.

Gemäß Anspruch 9 ist des Weiteren vorgesehen, dass die Drehmomentmesseinrichtung einer der Lagerplatten benachbart angeordnet ist und mit einer Sendeeinrichtung versehen ist, durch welche ein dem Widerstandsdrehmoment proportionales Messsignal einer an der Lagerplatte feststehend angeordneten Empfangseinrichtung übermittelbar ist. Durch diese Anordnung ist insbesondere die Datenerfassung und -weiterleitung an eine entsprechende Auswerteeinrichtung und auch Anzeigeeinrichtung äußerst einfach durchführbar. Dabei ist selbstverständlich vorgesehen, dass die Drehmomentmesseinrichtung wasserdicht ausgebildet ist. Desgleichen gilt auch für die Empfangseinrichtung. Dabei ist die Drehmomentmesseinrichtung beispielsweise mit einem integrierten Akkumulator oder einer Batterie versehen, deren Kapazität für eine Betriebsdauer von mehreren hundert Stunden ausreichend ist.

Des Weiteren kann gemäß Anspruch 10 vorgesehen sein, dass der Empfangseinrichtung eine weitere Messeinrichtung zugeordnet ist oder dass die Empfangseinrichtung derart ausgestaltet ist, dass weitere Messdaten, insbesondere die Drehzahl der Kurbelwelle im Betrieb erfassbar und an die Auswerteeinrichtung übermittelbar ist. Durch diese Maßnahme werden die für eine Leistungsauswertung erforderlichen Messdaten zur Verfügung gestellt.

Es ist erkennbar, dass durch die erfindungsgemäße Ausgestaltung des Ergometers eine Leistungsmessung unter Wasser in äußerst einfacher und reproduzierbarer Art und Weise ermöglicht wird. Durch die Anordnung der Drehmomentmesseinrichtung direkt im Bereich der Tretkurbel ist eine Leistungsmessung unter kontrollierten Bedingungen sicher durchführbar. Dabei kann bei der Leistungsmessung beispielsweise auch eine Steigerung von Schlagvolumen und Herzfrequenzanstieg sowie der Sauerstoffverbrauch zusätzlich ermittelt und in einer elektronischen Auswerteeinrichtung im direkten Zusammenhang mit den erfassten Leistungsdaten ausgewertet werden. Es wird somit insbesondere Leistungsund Freizeitsportlern eine genaue Erfassung der erbrachten Arbeit ermöglicht. Somit wird eine optimale Grundlage für eine aktive Trainingsplanung und -steuerung gegeben. Des Weiteren ergibt sich eine definierte Reproduzierbarkeit der Leistung in "Watt" auch für wenig belastbare Personen und Patienten, so dass für diesen Personenkreis ein präzise abgestimmtes Trainingsprogramm ausgearbeitet werden kann.

Mit dem erfindungsgemäßen Ergometer ist es erstmals möglich, im Wasser reproduzierbar Leistung zu messen. Die Leistung, die beim Training erbracht wird, kann insbesondere für jede einzelne Person, z. B. bezogen auf die Eintauchtiefe, gemessen werden.

Insbesondere hebt sich das erfindungsgemäße Ergometer vom bisherigen Stand der Technik ab. Bisher dienten bei einem Training im Wasser nur die Tretgeschwindigkeiten und Veränderungen der Pedalhebel als Parameter zur Intensitäts- und Leistungssteuerung. Wann die vergleichbare Leistung im Einzelnen dabei erbracht wurde, war bisher nicht messbar. Im Gegensatz dazu stellt die achsengerechte Bewegung auf dem "Unterwasserergometer" einen standardisierteren Ablauf dar. Individualisierbar ist die Pedalbewegung nur durch die Kraft, die auf das Pedal gebracht wird. Nun ist es direkt möglich, die erbrachte Kraft über das eingeleitete Drehmoment zu messen und diese computergerecht auszuwerten.

Mit dem erfindungsgemäßen Ergometer wird durch die direkte Reproduzierbarkeit der Leistung eine erstmalig genaue Überprüfbarkeit dieser Leistung im Wasser und eine direkte Vergleichbarkeit der Ergometriedaten außerhalb des Wassers geboten. Das Training im Sport und die Patientenführung ist datenspezifisch möglich, da die Daten einem Leistungsablauf zugeordnet werden können.

Anhand der Zeichnung wird nachfolgend ein Ausführungsbeispiel der Erfindung näher erläutert. Es zeigt:
- Fig. 1: eine Seitenansicht eines erfindungsgemäßen Ergometers;
- Fig. 2: eine Ansicht II eines vorderen Rahmenteils des Ergometers aus Fig. 1;
- Fig. 3: eine Ansicht III eines hinteren Rahmenteils des Ergometers aus Fig. 1;
- Fig. 4: eine perspektivische Explosionsdarstellung einer Kurbelwelle zusammen mit zwei Lagerplatten, der Kurbelwellenlagerung sowie einer Drehmomentmesseinrichtung;
- Fig. 5: eine perspektivische Explosionsdarstellung einer Lagernabe sowie zweier Tragstangen zusammen mit zwei Widerstandselementen und einem mit der Drehmomentmesseinrichtung aus Fig. 4 koppelbaren Kupplungsring;
- Fig. 6: die Bauteile aus den Fig. 4 und 5 im montierten Zustand, wobei an einer der Lagerplatten eine Empfangseinrichtung angeordnet ist, mittels welcher von der Drehmomentmesseinrichtung gesendeten Daten einer Auswerteeinrichtung (in der Zeichnung nicht näher dargestellt) übermittelbar sind;
- Fig. 7: einen teilweisen Horizontalschnitt durch den erfindungsgemäßen Kurbeltrieb.

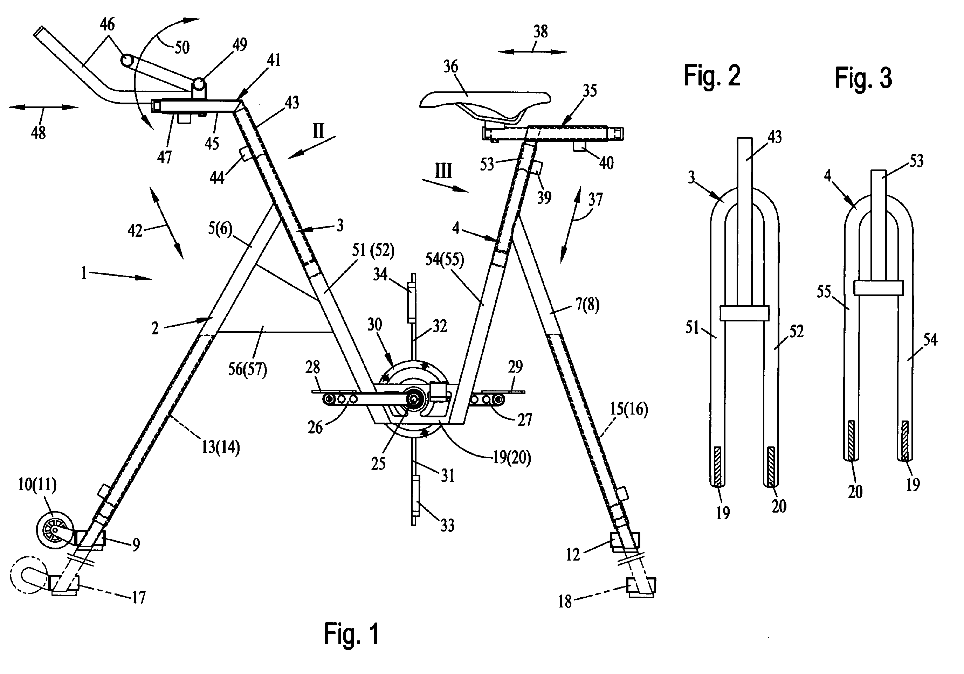

Fig. 1 zeigt beispielhaft eine Seitenansicht eines erfindungsgemäßen Ergometers 1, welcher ein mehrteiliges Grundgestell 2 aufweist. Dieses Grundgestell besteht aus einem vorderen Rahmenteil 3, einem hinteren Rahmenteil 4 sowie zwei vorderen, parallel zueinander verlaufenden Standrohren 5 und 6 und zwei hinteren Standrohren 7 und 8, welche ebenfalls parallel zueinander verlaufen. Dabei sind in Fig. 1 von den vorderen Standrohren und den hinteren Standrohren jeweils nur eines, nämlich das Standrohr 5 und das Standrohr 7 sichtbar.

Im unteren Endbereich der beiden parallel verlaufenden vorderen Standrohre 5 und 6 ist eine Stütztraverse 9 vorgesehen, welche sich seitlich über die beiden vorderen Standrohre 5 und 6 erstreckt. An dieser Stütztraverse 9 sind für den Transport in deren äußeren Endbereichen zwei Laufrollen 10 und 11 vorgesehen, von welchen in Fig. 1 lediglich eine der Laufrollen 10 sichtbar ist. Des Weiteren ist auch im unteren Endbereich der hinteren Standrohre 7 und 8 eine Quertraverse 12 vorgesehen, welche ebenfalls seitlich für einen sicheren Stand des Ergometers 1 über die Standrohre 7 und 8 hinaus stehen.

Beim vorliegenden Ausführungsbeispiel sind die Standrohre 5 und 6 bzw. 7 und 8 mit ausziehbaren Teleskoprohren 13, 14 bzw. 15, 16 versehen, an welchen einerseits die Stütztraverse 9 und andererseits die Quertraverse 12 befestigt ist. Diese Teleskoprohre 13, 14 bzw. 15, 16 sind aus den Standrohren 5, 6 bzw. 7, 8 ausziehbar und können zur Einstellung in ihrer jeweils ausgezogenen Position fixiert werden. Damit wird eine Höheneinstellung des Ergometers 1 zur Anpassung an die Körpergröße einer Person sowie an die herrschende Wassertiefe in einfacher Weise ermöglicht. Ein teilweise ausgezogener Zustand dieser Teleskoprohre 13, 14 bzw. 15, 16 zusammen mit der Stütztraverse 9 bzw. der Quertraverse 12 ist in Fig. 1 in Phantomlinien 17 bzw. 18 dargestellt.

Des Weiteren ist aus Fig. 1 erkennbar, dass die beiden Rahmenteile 3 und 4 in ihrem unteren Endbereich über Lagerplatten 19 und 20 feststehend miteinander verbunden sind. Diese Lagerplatten sind insbesondere im Teilschnitt aus Fig. 2 und 3 erkennbar.

Diese Lagerplatten 19, 20 dienen zur drehbaren Lagerung einer Kurbelwelle 25, in deren seitlichem äußeren Endbereich jeweils ein Pedalhebel 26 bzw. 27 drehfest angeordnet ist. Diese Pedalhebel 26 und 27 dienen jeweils zur Aufnahme des eigentlichen Pedals 28 bzw. 29. Des Weiteren ist aus Fig. 1 erkennbar, dass auf der Kurbelwelle 25 zwischen den beiden Lagerplatten 19 und 20 eine Drehmomentmesseinrichtung 30 vorgesehen ist, welche mit zwei sich diametral gegenüberliegend angeordneten, sich radial erstreckenden Tragstangen 31 und 32 in drehfester Verbindung steht. Diese Tragstangen sind jeweils mit einem Widerstandselement 33 bzw. 34 versehen, welche beim vorliegenden Ausführungsbeispiel plattenförmig ausgebildet sind. Hier sind auch andere Formgebungen, wie teilweise aus dem Stand der Technik bekannt ist denkbar.

Des Weiteren ist aus Fig. 1 ersichtlich, dass das hintere Rahmenteil 4 mit einem Sattelträger 35 versehen ist, über welchen ein entsprechender Sattel 36 in Richtung des Doppelpfeiles 37 höhenverstellbar und in Richtung des Doppelpfeiles 38 horizontal verstellbar ist. Die jeweils eingestellte Horizontalposition bzw. Vertikalposition des Sattelträgers 35 bzw. des Sattels 36 ist über entsprechende Klemm- oder Rastvorrichtungen 39 bzw. 40 fixierbar.

Das vordere Rahmenteil 3 dient zur Aufnahme eines Lenkerträgers 41, welcher in Richtung des Doppelpfeiles 42 längsverstellbar in einem Stützrohr 43 des vorderen Rahmenteils 3 aufgenommen ist. Dieses Stützrohr 43 ist insbesondere in der Ansicht der Fig. 2 erkennbar. Zur Festlegung der entsprechenden Axialstellung des Lenkerträgers 41 im Stützrohr 43 ist im Bereich des Stützrohres 43 eine Klemm- oder Rasteinrichtung 44 vorgesehen.

Des Weiteren ist aus Fig. 1 ersichtlich, dass der Lenkerträger 41 ein etwa horizontal verlaufendes Aufnahmerohr 45 aufweist, über welches der eigentliche Lenker 46 über ein Führungsrohr 47 in Richtung des Doppelpfeiles 48 horizontal verstellbar ist. Auch können verschiedenen Lenkertypen 46 vorgesehen sein, wie dies in Fig. 1 beispielhaft dargestellt ist. Auch kann der Lenker 46, wie in Fig. 1 beispielhaft dargestellt, über eine entsprechende Schwenklagerung 49 um den Doppelpfeil 50 schwenkbar ausgebildet sein. Durch diese verschiedenen Verstellmöglichkeiten einerseits des Sattels 36 und andererseits des Lenkers 46 ist das erfindungsgemäße Ergometer 1 individuell an unterschiedliche Körperproportionen einer Person beliebig anpassbar.

In Fig. 2 ist des Weiteren erkennbar, dass das Stützrohr 43 feststehend am Rahmenteil 3 angeordnet ist, insbesondere mit diesem verschweißt ist. Dieses Rahmenteil 3 ist U-förmig ausgebildet und weist zwei vertikal nach unten gerichtete Rahmenschenkel 51 und 52 auf, in deren unteren Endbereich jeweils eine der Lagerplatten 19 bzw. 20 feststehend angeordnet ist. Auch diese Verbindung zwischen den Lagerplatten 19 und 20 und den beiden Rahmenschenkeln 51 und 52 kann beispielsweise als Schweißverbindung ausgebildet sein.

In ähnlicher Weise ist auch der hintere Rahmenschenkel 4 ausgestaltet, wie aus Fig. 3 ersichtlich ist. Auch dieser weist zur Aufnahme des Sattelträgers 35 ein entsprechendes Stützrohr 53 auf (siehe auch Fig. 1), in welchem der Sattelträger 35 axial verstellbar und feststellbar aufgenommen ist. Auch das hintere Rahmenteil 4 ist U-förmig ausgebildet und weist dementsprechend ebenfalls zwei parallel zueinander verlaufende, nach unten gerichtete Rahmenschenkel 54 und 55 auf. Auch diese Rahmenschenkel 54, 55 sind beispielsweise über eine Schweißverbindung mit den beiden Lagerplatten 19 und 20 verbunden. In Fig. 1 ist dabei lediglich jeweils einer der Rahmenschenkel 51 bzw. 54 des vorderen Rahmenteils 3 bzw. des hinteren Rahmenteils 4 erkennbar. Hieraus ist auch ersichtlich, dass diese Rahmenschenkel 51 und 55 über die "vorne liegende" Lagerplatte 19 feststehend in ihrem unteren Endbereich miteinander verbunden sind. Dabei sind die beiden Rahmenschenkel 3 und 4 etwa V-förmig zueinander angeordnet. Zur Verbindung des vorderen Rahmenschenkels 3 zu den beiden Standrohren 5 und 6 können Stabilisierungsstege 56 und 57 vorgesehen sein, von welchen in Fig. 1 lediglich der "vorn liegende" Stabilisierungssteg 56 erkennbar ist.

Aus der Darstellung der Fig. 1 ist weiter ersichtlich, dass das erfindungsgemäße Ergometer 1 äußerst variabel durch die Höhenverstellbarkeit der Teleskoprohre 13, 14 bzw. 15, 16 einerseits und andererseits durch die variable Einstellbarkeit des Sattelträgers 35 bzw. des Lenkerträgers 41 sowohl an die jeweils vorliegende Wassertiefe als auch an die physiologischen Voraussetzungen einer Person variabel anpassbar ist. Durch die Drehmomentmesseinrichtung 30 sind die individuellen Leistungsdaten erfassbar, so dass mit dem erfindungsgemäßen Ergometer 1 ein reproduzierbares Unterwassertraining ermöglicht wird.

Fig. 3 zeigt hierzu einen Teil des Aufbaus der Kurbelwelle 25 zusammen mit den beiden Lagerplatten 19, 20, der Drehmomentmesseinrichtung 30 sowie den zugehörigen Lager- und Montageteilen in perspektivischer Explosionsdarstellung.

Beim vorliegenden Ausführungsbeispiel ist die Kurbelwelle 25 zweiteilig ausgebildet und bildet einen Zylinderabschnitt 60 sowie einen Lagerabschnitt 61. Der Zylinderabschnitt 60 weist zum Lagerabschnitt 61 hin einen Führungszapfen 62 auf, mit welchem der Zylinderabschnitt 60 in eine entsprechende Führungsbohrung 63 des Lagerabschnittes 61 einsteckbar ist. An diesen Führungszapfen 62 schließt sich axial ein radial erweiterter Montageabschnitt 64 an, mit welchem der Zylinderabschnitt 60 in den Lagerabschnitt 61 bzw. eine entsprechende Montagebohrung 65 des Lagerabschnittes 61 einsteckbar ist. Im Bereich ihres Montageabschnittes 64 weist der Zylinderabschnitt 60 eine Sacklochbohrung 66 auf, welche zur feststehenden Kopplung des Zylinderabschnittes 60 im Lagerabschnitt 61 dient. Hierzu ist der Lagerabschnitt 61 mit einem entsprechend radial verlaufenden Innengewinde 67 versehen, in welches eine Madenschraube 68 einschraubbar ist.

Anstatt der beispielhaft dargestellten Ausführungsform dieser drehfesten Verbindung zwischen dem Zylinderabschnitt 60 und dem Lagerabschnitt 61 kann auch jede andere geeignete Verbindung zur drehfesten Kopplung des Zylinderabschnittes 60 mit dem Lagerabschnitt 61 vorgesehen sein. Insbesondere sind hier auch Formschlussverbindungen in Form von Keilwellenverbindungen, Mehrkantverbindungen und dgl. vorstellbar.

Die zweiteilige Ausbildung der Kurbelwelle 25 ist ebenfalls nicht zwingend vorzusehen, hat aber im Wesentlichen Vorteile für die Montage der einzelnen Bauteile. Es ist hier auch eine einteilige Ausbildung der Kurbelwelle 25 denkbar.

In seinem dem Führungszapfen 62 gegenüberliegenden Endbereich weist der Zylinderabschnitt 60 einen Aufnahmekonus 69 auf, auf welchen der in Fig. 1 dargestellte Pedalhebel 27 aufsteckbar ist. Zur drehfesten Verbindung zwischen diesem Pedalhebel 27 und dem Aufnahmekonus 69 ist beim vorliegenden Ausführungsbeispiel ein Verbindungskeil 70 vorgesehen.

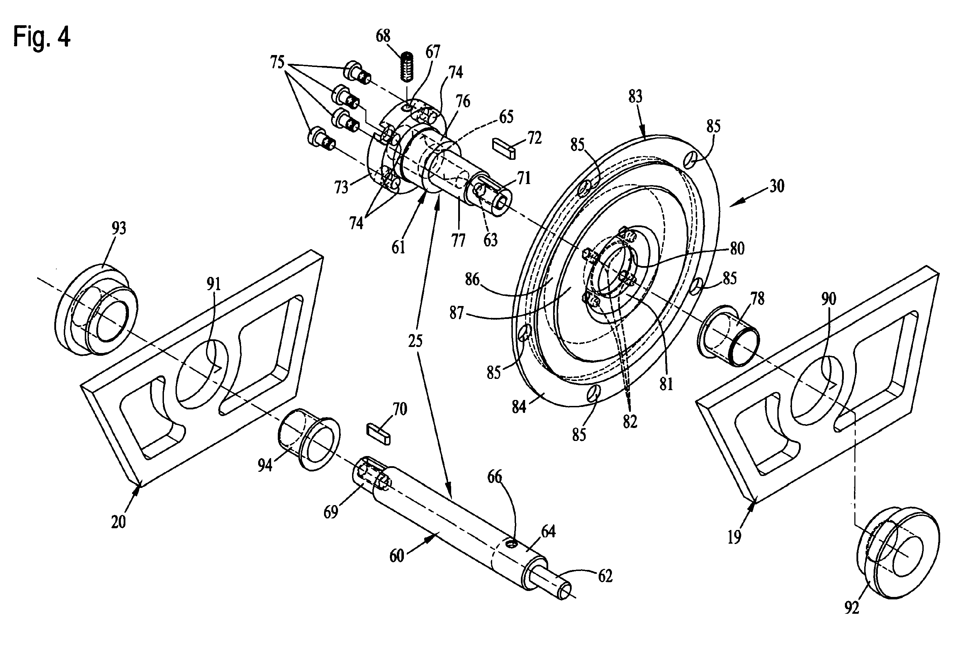

Des Weiteren ist aus Fig. 4 erkennbar, dass auch der Lagerabschnitt 61 in seinem zur Drehmomentmesseinrichtung 30 hin gerichteten Endbereich einen radial verjüngt ausgebildeten Aufnahmekonus 71 bildet, welcher beim vorliegenden Ausführungsbeispiel zur Aufnahme des Pedalhebels 26 aus Fig. 1 dient. Auch hier dient zur drehfesten Verbindung zwischen dem Pedalhebel 26 und dem Aufnahmekonus 71 ein entsprechender Verbindungskeil 72.

In seinem diesem Aufnahmekonus 71 gegenüberliegenden Endbereich bildet der Lagerabschnitt 61 einen radial erweiterten, umlaufenden Montageflansch 73, welcher beim vorliegenden Ausführungsbeispiel mit vier gleichmäßig am Umfang verteilt angeordneten Durchgangsbohrungen 74 versehen ist. Durch diese Durchgangsbohrungen 74 sind entsprechend vier Montageschrauben 75 hindurch steckbar. An diesen Montageflansch 73 schließt sich zum Verbindungskonus 71 hin ein Aufnahmeabschnitt 76 an, auf welchen die Drehmomentmesseinrichtung 30 aufsteckbar ist. Zwischen diesem Aufnahmeabschnitt 76 und dem Aufnahmekonus 71 bildet der Lagerabschnitt 61 einen Lagerzylinder 77, über welchen der Lagerabschnitt 61 entsprechend drehbar in einer Lagerbuchse 78 aufgenommen wird.

Zur Montage der Drehmomentmesseinrichtung 30 bildet diese eine Durchgangsbohrung 80, in deren Umgebungsbereich ein Montageflansch 81 vorgesehen ist. Dieser Montageflansch 81 ist mit insgesamt vier Montagegewinden 82 versehen, in welche die Montageschrauben 75 einschraubbar sind. Dementsprechend wird über die Montageschrauben 75 und den Montageflansch 73 sowie den Montageflansch 81 eine drehfeste und feststehende Verbindung zwischen der Drehmomentmesseinrichtung 30 und dem Lagerabschnitt 61 im radial inneren Bereich der Drehmomenteinrichtung 30 bewirkt.

Des Weiteren ist aus Fig. 4 erkennbar, dass die Drehmomentmesseinrichtung 30 scheibenförmig ausgebildet ist und ein scheibenförmiges Grundgehäuse 83 aufweist, welches in seinem radial äußeren Bereich mit einem umlaufenden Montagesteg 84 versehen ist. Dieser Montagesteg 84 weist mehrere Kupplungselemente in Form von Durchgangsbohrungen 85 auf, über welche die Drehmomentmesseinrichtung 30 mit den in Fig. 1 erkennbaren Tragstangen 31 und 32 im radial äußeren Bereich der Drehmomentmesseinrichtung 30 in drehfeste Verbindung bringbar ist.

Zwischen diesem radial äußeren Montagesteg 84 und dem inneren Montageflansch 81 bildet die Drehmomentmesseinrichtung 30 einen in Fig. 4 nicht weiter erkennbaren Aufnahmeraum, welcher mittels eines Deckels 86 dicht verschlossen ist. In diesem Aufnahmeraum befindet sich entsprechend die eigentliche Messeinheit, welche beispielsweise mehrere entsprechend verschaltete Dehnmessstreifen aufweisen kann. Des Weiteren ist aus Fig. 4 erkennbar, dass dieser Deckel 86 zum Montageflansch 81 hin ein axial nach außen versetztes Ringsegment 87 bildet. Im Bereich dieses Ringsegmentes 87 kann beispielsweise eine "Sendespule" einer Sendeeinrichtung vorgesehen sein, über welche die von der Drehmomentmesseinrichtung 30 erfassten Messsignale einer entsprechenden Empfangseinrichtung zuführbar sind, welche in Fig. 4 nicht explizit dargestellt ist. D.h., dass bei der Beaufschlagung des inneren Montageflansches 81 der Drehmomentmesseinrichtung 30 und einem entsprechend am äußeren Montagesteg 84 wirkenden Widerstandsmoment die zwischen diesen beiden Bauelementen angeordnete Messeinrichtung ein entsprechendes elektronisches weiterverarbeitbares Messsignal erzeugt, welches dem entsprechenden Widerstandsmoment am äußeren Montagesteg 84 proportional ist. Hierzu sei beispielhaft auf die DE 37 22 728 C1 verwiesen, in welcher diverse Grundprinzipien einer solchen Messeinrichtung beschrieben sind.

Des Weiteren ist aus Fig. 4 noch ersichtlich, dass die beiden Lagerplatten 19 und 20 jeweils eine Lagerbohrung 90 bzw. 91 aufweisen, in welche jeweils feststehend eine Aufnahmebuchse 92 bzw. 93 einsetzbar ist. Auch der Lagerplatte 20 ist eine Lagerbuchse 94 zugeordnet, über welche der Zylinderabschnitt 60 in der Lagerplatte 20 bzw. der Aufnahmebuchse 92 drehbar gelagert ist. Dementsprechend wird auch die Lagerbuchse 78 im montierten Zustand von der Aufnahmebuchse 92 der Lagerplatte 19 aufgenommen.

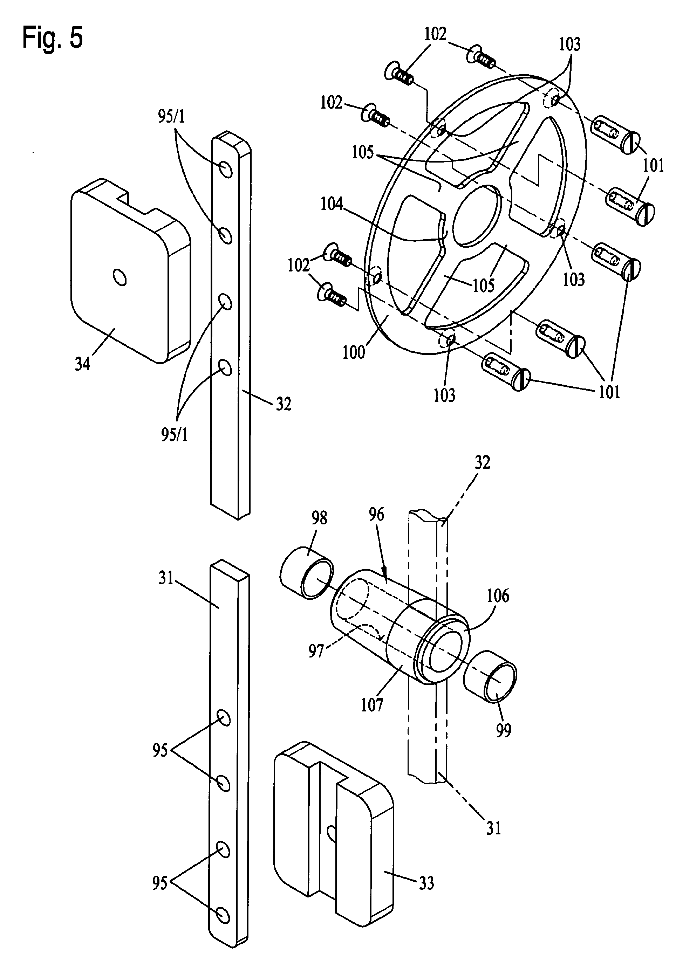

Fig. 5 zeigt in perspektivischer Explosionsdarstellung die das Widerstandsmoment erzeugenden Bauteile. Hierbei sind in vertikaler Ausrichtung die beiden Tragstangen 31 und 32 mit ihren beiden zugehörigen Widerstandselementen 33 und 34 erkennbar. Die Tragstangen 31 und 32 weisen in einem vorbestimmten radialen Abstand voneinander mehrere Durchgangsbohrungen 95 bzw. 95/1 auf, so dass die beiden Widerstandselemente 33 und 34 in unterschiedlichen "Radial"- Positionen an der jeweils zugehörigen Tragstange 31 bzw. 32 feststehend montierbar sind. Zur feststehenden Montage der Widerstandselemente 33 und 34 an der jeweils zugehörigen Tragstange 31 bzw. 32 können hier unterschiedliche Systeme vorgesehen sein, so z. B. eine herkömmliche Verschraubung, welche in Fig. 5 nicht explizit dargestellt ist. Auch sind Rastverbindungen, wie diese beim Stand der Technik eingesetzt werden, für eine verstellbare Verbindung vorstellbar.

Des Weiteren zeigt Fig. 5 eine Lagernabe 96, welche im Betrieb feststehend mit den beiden Tragstangen 31 und 32 in Verbindung steht, wie dies in Phantomlinien angedeutet ist. Für eine entsprechende Verbindung dieser Bauteile kann hier beispielsweise eine Schweißverbindung oder auch jede andere geeignete Verbindung vorgesehen sein.

Des Weiteren weist die Lagernabe 96 eine Lagerbohrung 97 auf, in deren Endbereichen jeweils eine Lagerbuchse 98 bzw. 99 einsetzbar ist. Über diese beiden Lagerbuchsen 98 und 99 ist die Lagernabe 96 drehbar auf dem freien Bereich des Zylinderabschnittes 60 der Lagerbuchse 25 aus Fig. 4 mit geringem Spiel gelagert.

Des Weiteren ist aus Fig. 5 ein Kupplungsring 100 erkennbar, dessen Ringdurchmesser dem Ringdurchmesser des Montagesteges 84 der Drehmomentmesseinrichtung 30 aus Fig. 4 entspricht. Des Weiteren zeigt Fig. 5 im Bereich dieses Kupplungsringes 100 mehrere Kupplungselemente in Form von Kupplungszapfen 101, welche zur drehfesten Kopplung des Kupplungsringes 100 mit dem Montagesteg 84 der Drehmomentmesseinrichtung 30 aus Fig. 4 dienen. Zur feststehenden Montage dieser Kupplungszapfen 101 am Kupplungsring 100 sind entsprechende Befestigungsschrauben 102 vorgesehen, welche durch Montagebohrungen 103 des Kupplungsringes 100 hindurch steckbar sind.

Im Zentrum des Kupplungsringes 100 ist ein Montagering 104 vorgesehen, welcher über insgesamt vier Speichen 105 mit dem Kupplungsring 100 in drehfester Verbindung steht. Mit diesem Montagering 104 ist der Kupplungsring 100 auf einen entsprechend stirnseitig gebildeten Lagerabschnitt 106 der Lagernabe 96 aufsetzbar und beispielsweise rückseitig mit der Lagernabe 96 verschweißbar. Auch ist vorgesehen, dass die im Bereich eines zylindrischen Lagerabschnittes 107 dem Montageabschnitt 106 unmittelbar benachbart angeordneten Tragstangen 31 und 32 mit dem Kupplungsring 100 beispielsweise über eine Schweißverbindung oder auch eine Schraubverbindung feststehend in Verbindung stehen. Somit ist das von den beiden Tragstangen 31 und 32 mit ihren beiden Widerstandselementen 33 und 34 im Betrieb erzeugte Widerstandselement in einfachster Weise über den Kupplungsring 100 sowie die Kupplungszapfen 101 auf die Drehmomentmesseinrichtung 30 übertragbar. Oder anders formuliert: Die Tragstangen 31 und 32 werden beim vorliegenden Ausführungsbeispiel mittelbar über die Drehmomentmesseinrichtung 30 drehend angetrieben.

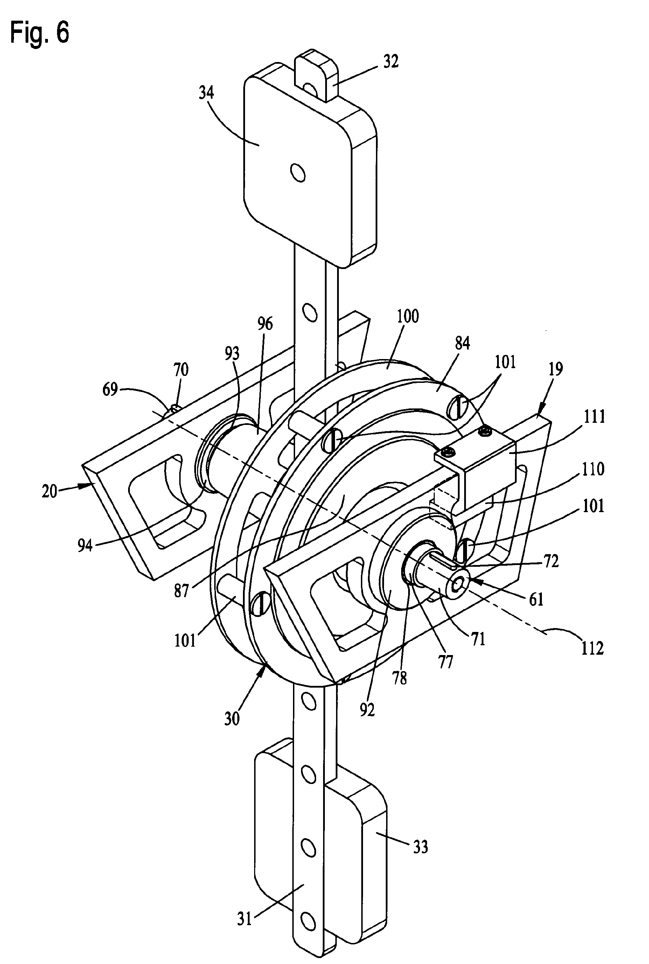

Hierzu zeigt Fig. 6 eine perspektivische Darstellung des fertig montierten Zustandes der vorangegangen beschriebenen Bauteile aus den Fig. 4 und 5.

Es ist erkennbar, dass die beiden Tragstangen 31 und 32 "rückseitig" am Kupplungsring 100 angeordnet sind und mit diesem vorzugsweise verschweißt sind. Des Weiteren sind diese beiden Tragstangen 31 und 32 mit der Lagernabe 96 verbunden und können mit dieser ebenfalls verschweißt sein, wie dies bereits zu Fig. 5 beschrieben wurde. Der Kupplungsring 100 seinerseits ist wiederum über die Kupplungszapfen 101 mit dem Montagesteg 84 der Drehmomentmesseinrichtung 30 verbunden. Des Weiteren ist erkennbar, dass diese Drehmomentmesseinrichtung 30 insbesondere mit ihrem Ringsegment 87 in unmittelbarer Nachbarschaft zur Lagerplatte 19 angeordnet ist. Da in diesem Umfangsbereich bzw. radialen Bereich dieses Ringsegmentes 87 in der Drehmomentmesseinrichtung 30 eine umlaufende Sendeeinrichtung (in der Zeichnung nicht explizit dargestellt) angeordnet ist, kann, wie dies aus Fig. 6 ersichtlich ist, an der Lagerplatte 19 eine Empfängereinrichtung 110 vorgesehen sein, welche beim vorliegenden Ausführungsbeispiel mittels einer Montagevorrichtung 111 an der Lagerplatte 19 feststehend montiert ist. Dabei befindet sich die Empfängereinrichtung 110 unmittelbar im radialen Bereich des Ringsegmentes 87 und somit im Bereich der Sendeinrichtung, so dass eine unmittelbare Signalübertragung gewährleistet ist. Dieser Empfängereinrichtung 110 kann eine weitere Messeinrichtung (in der Zeichnung nicht dargestellt) zugeordnet sein, über welche beispielsweise die Drehzahl der Kurbelwelle erfassbar ist. Auch kann eine solche Erfassung - bei entsprechender elektronischer Ausgestaltung der Empfängereinrichtung 110 - über die Empfängereinrichtung 110 selbst erfolgen. Zur Drehzahlmessung können hier Impulsgeber oder auch andere elektronische Bauelemente vorgesehen sein.

Des Weiteren ist erkennbar, dass in der Lagerplatte 19 die Aufnahmebuchse 92 eingesetzt ist. Diese nimmt wiederum, was in Fig. 6 andeutungsweise erkennbar ist, die Lagerbuchse 78 auf, in welcher wiederum der Lagerzylinder 77 des Lagerabschnittes 61 drehbar aufgenommen ist. Der Aufnahmekonus 71 mit seinem eingesetzten Verbindungskeil 72 steht über die Aufnahmebuchse 92 axial in Richtung der Drehachse 112 der gesamten Anordnung nach außen vor. Desgleichen gilt auch für den Aufnahmekonus 69, welcher mit dem Verbindungskeil 70 bestückt ist und axial über die in Fig. 6 von der Innenseite her erkennbare Aufnahmebuchse 93 axial nach außen vorsteht. Diese Aufnahmebuchse 93 ist ebenfalls in die Lagerplatte 20 eingesetzt, wobei diese die Lagerbuchse 94 aufnimmt. Die Lagernabe 96 ist auf den in Fig. 6 nicht weiter erkennbaren Zylinderabschnitt 60 aufgesetzt, so dass die komplette Einheit bestehend aus der Lagernabe 96, den beiden Tragstangen 31 und 32, dem Kupplungsring 100 sowie der Drehmomentmesseinrichtung 30 zwischen den beiden Lagerplatten 19 und 20 aufgenommen wird.

Die Zweiteilung der in Fig. 4 beschriebenen Kurbelwelle 25 hat beim vorliegenden Ausführungsbeispiel einen erheblichen Montagevorteil, da zunächst die Einheit bestehend aus dem Lagerabschnitt 61 und der daran feststehend montierten Drehmomentmesseinrichtung 30 vorab in die Lagerung der Lagerplatte 19 einsetzbar sind. Anschließend kann über die Kupplungszapfen 101 der Kupplungsring 100 zusammen mit der Lagernabe 96 und den beiden Tragstangen 31 und 32 montiert werden. Daraufhin kann nun der Zylinderabschnitt 60 in den Lagerabschnitt 61 eingesetzt werden und mittels der Madenschraube 68 mit diesem feststehend in Verbindung gebracht werden. Des Weiteren ist aus Fig. 6 ersichtlich, dass die beiden Widerstandselemente 33 und 34 an den beiden Tragstangen 31 und 32 feststehend montiert sind.

Des Weiteren sei an dieser Stelle noch angemerkt, dass die Signalweiterleitung von der Empfangseinrichtung 110 einerseits über eine Kabelverbindung oder andererseits über ein Sende-Empfänger-System an eine Auswerteeinrichtung übermittelt werden kann und über eine Displayanzeige der trainierenden Person anzeigbar ist. Dies ist allerdings weithin aus dem Stand der Technik bekannt und wird somit hier nicht näher erläutert.

Auch die Befestigungsmittel der Widerstandselemente 33 zu deren Montage in unterschiedlichen Radialstellungen an den Tragstangen 31 und 32 ist aus dem Stand der Technik hinreichend bekannt, so dass darauf hier auch nicht weiter eingegangen wird. Grundsätzlich können hier Schraubverbindungen, Rastverbindungen oder dgl. mehr vorgesehen sein. Auch eine Klemmung wäre hier grundsätzlich vorstellbar.

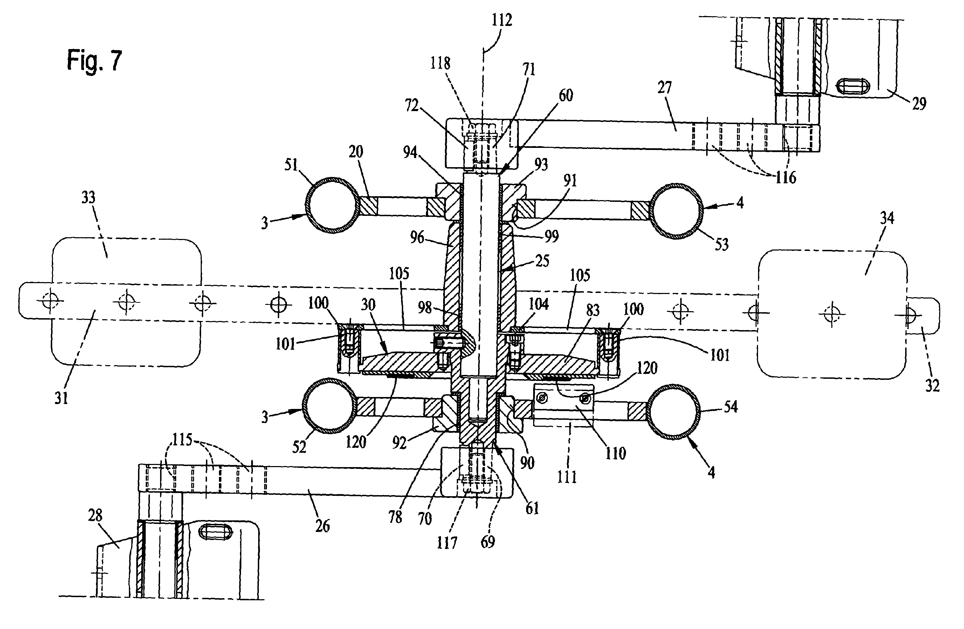

Fig. 7 zeigt einen teilweisen Horizontalschnitt im Bereich der Drehachse 112 durch die Anordnung aus Fig. 6. Zusätzlich sind hier noch die Rahmenschenkel 51, 52 des vorderen Rahmenteiles 3 sowie die Rahmenschenkel 54 und 55 des hinteren Rahmenteiles 4 im Schnitt erkennbar. Die beiden Tragstangen 31 und 32 sind im Vergleich zu Fig. 6 um eine 90° gedrehte Stellung in Phantomlinien dargestellt, wobei die montierten Widerstandselemente 33 und 34 ebenfalls in Phantomlinien erkennbar sind.

Fig. 7 zeigt ebenfalls die beiden Pedalhebel 26 und 27, an welchen die beiden Pedale 28 und 29 drehbar befestigt sind. Bezüglich der Montage dieser Pedale 28 und 29 ist in besonderer Ausgestaltung vorgesehen, dass hier mehrere Innengewinde 115 bzw. 116 in unterschiedlichen radialen Abständen zur Drehachse 112 vorgesehen sind, so dass die Pedale 28 und 29 in unterschiedlichen radialen Abständen zur Drehachse 112 am jeweils zugehörigen Pedalhebel 26 bzw. 27 anordenbar sind. Die beiden Pedalhebel 26 und 27 sind auf dem jeweils zugehörigen bzw. zugeordneten Aufnahmekonus 69 bzw. 71 aufgesetzt und stehen mit der Kurbelwelle 25 über die Verbindungskeile 70 bzw. 72 drehfest in Verbindung. Zur Sicherung sind beim vorliegenden Ausführungsbeispiel, jeweils Montageschrauben 117 bzw. 118 vorgesehen, wie dies hinreichend aus dem Stand der Technik bekannt ist.

Des Weiteren ist erkennbar, dass in die Lagerbohrung 90 der Lagerplatte 19 die Aufnahmebuchse 92 eingesetzt ist, welche wiederum zur drehbaren Lagerung des Lagerabschnittes 61 die Lagerbuchse 78 aufnimmt. In gleicher Weise ist die Aufnahmebuchse 93 in die Lagerplatte 20 eingesetzt und nimmt die zugehörige Lagerbuchse 94 auf.

Das in Fig. 7 vereinfacht dargestellte Grundgehäuse 83 weist in ihrem Deckelbereich die vorerwähnte Sendeeinrichtung 120 auf, welcher die Empfängereinrichtung 110 unmittelbar benachbart angeordnet ist. Dabei ist die Montagevorrichtung 111 in Phantomlinien dargestellt, da diese sich vor der Zeichenebene befinden. Auch ist erkennbar, dass die Drehmomentmesseinrichtung 30 über die Kupplungszapfen 101 mit dem Kupplungsring 100 feststehend in Verbindung steht. Dieser Kupplungsring 100 ist wiederum über die Speichen 105 und den inneren Montagering 104 drehfest mit der Lagernabe 96 verbunden.

Die Lagernabe 96 wiederum ist drehbar über deren Lagerbuchsen 98 und 99 auf dem Zylinderabschnitt 60 der Kurbelwelle 25 aufgenommen. Es ist leicht vorstellbar, dass bei einem drehenden Antrieb der Kurbelwelle 25 über die beiden Pedalhebel 26 und 27 die beiden Tragstangen 31 und 32 zusammen mit ihren Widerstandselementen 33 und 34 drehend angetrieben werden. Aufgrund des Unterwassereinsatzes bieten somit die Widerstandselemente 33 und 34 einen bestimmten Drehwiderstand, so dass diese Bauelemente zusammen mit den Tragstangen 31 und 32 ein Widerstandsmoment in den Kupplungsring 100 eingeleiten. Vom Kupplungsring 100 wiederum wird dieses Widerstandsmoment über die Kupplungszapfen 101 zur Abbremsung der Drehmomentmesseinrichtung 30 auf diese übertragen.

Damit ist in der Drehmomentmesseinrichtung 30 ein zur jeweiligen Leistungsabgabe der trainierenden Person proportionales (im sinne einer linearen mathematischen Funktion) Signal erzeugbar. Als Sendeeinrichtung 120 und als Empfängereinrichtung 110 können hier jegliche beliebige aus dem Stand der Technik bekannte elektronische Einrichtungen vorgesehen sein. Hierzu kommen beispielsweise auch Sendespulen oder dgl. mehr in Frage.

Es ist erkennbar, dass aufgrund des äußerst einfachen Aufbaus mit dem erfindungsgemäßen Ergometer 1 beliebig reproduzierbare Leistungsdaten erfassbar und reproduzierbar voreinstellbar sind, so dass ein reproduzierbares Trainingsprogramm für eine trainierende Person, sei es aus dem Hochleistungssport oder aus dem Laiensport, in einfacher Weise gezielt erstellt werden kann.

Dabei ist ebenfalls vorstellbar, dass die Drehmomentmesseinrichtung 30, insbesondere bei einem einteiligen Aufbau der Kurbelwelle 25, etwa mittig zwischen den beiden Lagerplatten 19, 20 angeordnet ist. Die Tragstangen 31, 32 mit ihren Widerstandelementen 33, 34 können in diesem Fall beispielsweise direkt mit dem äußeren Montagesteg 84 des Grundgehäuses 83 verbunden sein, so dass der Kupplungsring 100 mit seinen Kupplungszapfen 101 auch entfallen kann. Eine etwa mittige Anordnung der Tragstangen 31, 32 zusammen mit den Widerstandelemente 33, 34 ist auch bei einer derartigen Ausführungsform gewährleistet. Für eine sichere Signalübertragung ist dann auch die Empfängereinrichtung 110 in entsprechend dichtem Abstand an das Ringsegment 87 der Drehmomentmesseinrichtung 30 heranzubringen.

## Patentansprüche

1. Ergometer (1) für den Einsatz unter Wasser bestehend aus einem Grundgestell (2), welches mit einem Kurbeltrieb versehen ist, der aus einer Kurbelwelle (25), zwei seitlich an der Kurbelwelle (25) angeordneten Pedalhebeln (26, 27) mit Pedalen (28, 29) besteht, wobei die Kurbelwelle (25) im Bereich der Pedalhebel (26, 27) drehbar im Grundgestell (2) gelagert ist und wobei wenigstens zwei radial zur Kurbelwelle (25) verlaufende, mit der Kurbelwelle (25) umlaufende Tragstangen (31, 32) vorgesehen sind, an welchen jeweils wenigstens ein Widerstandselement (33, 34) angeordnet ist, durch welches unter Wasser ein Widerstandmoment bei der Drehung der Kurbelwelle (25) bewirkt wird,
**dadurch gekennzeichnet,**
**dass** auf der Kurbelwelle (25) eine Drehmomentmesseinrichtung (30) vorgesehen ist, welche drehfest mit der Kurbelwelle (25) in Verbindung steht und,
**dass** die Tragstangen (31, 32) mit ihren Widerstandselementen (33, 34) auf der Kurbelwelle (25) drehbar gelagert und durch die Drehmomentmesseinrichtung (30) drehend antreibbar sind.

2. Ergometer nach Anspruch 1, **dadurch gekennzeichnet, dass** die Drehmomentmesseinrichtung (30) scheibenförmig ausgebildet ist und in ihrem radial äußeren Bereich mit Kupplungselementen (101) versehen ist, über welche die Tragstangen (31, 32) mit der Drehmomentmesseinrichtung (30) drehfest in Verbindung stehen.

3. Ergometer nach Anspruch 1 oder 2, **dadurch gekennzeichnet, dass** die Tragstangen (31, 32) etwa mittig zwischen den Pedalhebeln (26, 27) angeordnet und über eine gemeinsame Lagernabe (96) auf der Kurbelwelle (25) drehbar gelagert sind.

4. Ergometer nach Anspruch 2 oder 3, **dadurch gekennzeichnet, dass** zum drehenden Antrieb der Tragstangen (31, 32) ein Kupplungsring (100) vorgesehen ist, mit welchem die Tragstangen (31, 32) feststehend in Verbindung stehen und,
dass der Kupplungsring (100) mit den Kupplungselementen (85) der Drehmomentmesseinrichtung (30) drehfest gekoppelt ist.

5. Ergometer nach Anspruch 4, **dadurch gekennzeichnet, dass** zur Kopplung des Kupplungsringes (100) mit der Drehmomentmesseinrichtung (30) mehrere gleichmäßig am Umfang verteilt angeordnete Kupplungszapfen (101) vorgesehen sind.

6. Ergometer nach einem der Ansprüche 1 bis 5, **dadurch gekennzeichnet, dass** die Kurbelwelle (25) zur feststehenden Montage der Drehmomentmesseinrichtung (30) einen radial vorstehenden, umlaufenden Montageflansch (73) aufweist, mit welchem die Drehmomentmesseinrichtung (30) verschraubt ist.

7. Ergometer nach Anspruch 6, **dadurch gekennzeichnet, dass** die Kurbelwelle (25) im Bereich des Montageflansches (73) geteilt ist und einen Zylinderabschnitt (60) für die drehbare Lagerung der Lagernabe (96) der Tragstangen (31, 32) und einen Lagerabschnitt (61) für die Drehmomentmesseinrichtung (30) bildet und,
dass der Zylinderabschnitt (60) im Lagerabschnitt (61) drehfest aufgenommen ist.

8. Ergometer nach einem der Ansprüche 1 bis 7, **dadurch gekennzeichnet, dass** das Grundgestell (2) zur Lagerung der Kurbelwelle (25) zwei voneinander beabstandete Lagerplatten (19, 20) aufweist, zwischen welchen die Drehmomentmesseinrichtung (30) zusammen mit den Tragstangen (31, 32) angeordnete ist.

9. Ergometer nach Anspruch 8, **dadurch gekennzeichnet, dass** die Drehmomentmesseinrichtung (30) einer der Lagerplatten (19) benachbart angeordnet ist und mit einer Sendeeinrichtung (120) versehen ist, durch welche ein dem Widerstandsdrehmoment proportionales Messsignal einer an der Lagerplatte (19) feststehend angeordneten Empfangeinrichtung (110) übermittelbar ist und,
dass das Messsignal einer elektronischen Auswerteeinheit zuführbar und über eine Anzeigevorrichtung anzeigbar ist.

10. Ergometer nach Anspruch 9, **dadurch gekennzeichnet, dass** der Empfangseinrichtung (110) eine weitere Messeinrichtung zugeordnet ist oder dass die Empfangseinrichtung (110) derart ausgestaltet ist, dass weitere Messdaten, insbesondere die Drehzahl der Kurbelwelle im Betrieb erfassbar und an die Auswerteeinrichtung übermittelbar ist.
